# FASCICULE DE BREVET EUROPEEN

(11) **EP 1 716 705 B1**
(45) Date de publication et mention de la délivrance du brevet: **06.01.2010**
(21) Numéro de dépôt: 05728066.1
(22) Date de dépôt: 17.02.2005
(51) Int. Cl.: H04N 7/167, H04N 5/00, H04N 7/16

(54) **PROCEDE D APPARIEMENT D UN NOMBRE N DE TERMINAUX RECEPT EURS AVEC UN NOMBRE M DE CARTES DE CONTROLE D ACCES CONDITIO NNEL**
VERFAHREN ZUM ANPASSEN EINER ANZAHL N VON EMPFÄNGERENDGERÄTEN AN EINE ANZAHL M VON STEUERKARTEN FÜR BEDINGTEN ZUGANG
METHOD FOR MATCHING A NUMBER N OF RECEIVER TERMINALS TO A NUMBER M OF CONDITIONAL ACCESS CONTROL CARDS

(30) Priorité: 20.02.2004 FR 0450324
(43) Date de publication de la demande: 02.11.2006
(73) Titulaire: Viaccess, 92057 Paris La Défense Cedex (FR)
(72) Inventeur: BEUN, Frédéric, F-78400 CHATOU (FR); BOUDIER, Laurence, F-78400 CHATOU (FR); ROQUE, Pierre, F-75011 PARIS (FR); TRONEL, Bruno, F-92800 PUTEAUX (FR)
(74) Mandataire: Poulin, Gérard
(86) Numéro de dépôt international: PCT/FR2005/050102
(87) Numéro de publication internationale: WO 2005/081526

(56) Documents cités:
- WO-A-97/35430
- WO-A-99/57901

## Description

### DOMAINE TECHNIQUE

L'invention se situe dans le domaine de la sécurisation de données numériques diffusées et des équipements récepteurs destinés à recevoir ces données dans un réseau de distribution de données et/ou services et se rapporte plus spécifiquement à un procédé d'appariement d'un nombre N d'équipements récepteurs de données avec un nombre M de modules externes de sécurité, chaque équipement récepteur étant muni d'un identifiant unique, et chaque module externe de sécurité ayant un identifiant unique.

L'invention concerne également un équipement récepteur susceptible d'être apparié avec une pluralité de modules externes de sécurité pour gérer l'accès à des données numériques distribuées par un opérateur.

### ÉTAT DE LA TECHNIQUE ANTÉRIEURE

De plus en plus d'opérateurs offrent des données et services en ligne accessibles au moyen de terminaux munis de processeurs de sécurité. Généralement, les données et services distribués sont embrouillés à l'émission par des clés secrètes et désembrouillés à la réception par les mêmes clés secrètes préalablement mises à la disposition de l'abonné.

Outre les techniques classiques de contrôle d'accès basées sur l'embrouillage à l'émission et le désembrouillage à la réception des données distribuées, les opérateurs proposent des techniques basées sur l'appariement du terminal de réception avec un processeur de sécurité pour éviter que les données et services distribués ne soient accessibles à des utilisateurs munis d'un terminal volé ou d'une carte pirate.

Le document WO 99/57901 décrit un mécanisme d'appariement entre un récepteur et un module de sécurité basé, d'une part, sur le chiffrement et le déchiffrement des informations échangées entre le récepteur et le module de sécurité par une clé unique stockée dans le récepteur et dans le module de sécurité, et d'autre part, sur la présence d'un numéro de récepteur dans le module de sécurité.

Un inconvénient de cette technique provient du fait que l'association entre un récepteur et le module de sécurité qui lui est apparié est établie a priori, et qu'elle ne permet pas à l'opérateur de gérer efficacement son parc d'équipements récepteurs afin d'empêcher le détournement de cet équipement pour des utilisations frauduleuses.

Un but du procédé d'appariement selon l'invention est de permettre à chaque opérateur de limiter les utilisations de son parc de matériel de réception en contrôlant dynamiquement les configurations de l'équipement récepteur et des modules externes de sécurité destinés à coopérer avec cet équipement.

### EXPOSÉ DE L'INVENTION

L'invention préconise un procédé d'appariement d'un nombre N d'équipements récepteurs de données avec un nombre M de modules externes de sécurité, chaque équipement récepteur étant muni d'un identifiant unique, et chaque module externe de sécurité ayant un identifiant unique, ce procédé comportant une phase de configuration et une phase de contrôle.

Selon l'invention, la phase de configuration comporte les étapes suivantes :
- mémoriser dans chaque module externe de sécurité une liste d'identifiants d'équipements récepteurs,
- mémoriser dans chaque équipement récepteur une liste d'identifiants de modules externes de sécurité,
et la phase de contrôle consiste à autoriser l'accès aux données si l'identifiant d'un module externe de sécurité connecté à un équipement récepteur est présent dans la liste mémorisée dans cet équipement récepteur, et si l'identifiant dudit équipement récepteur est présent dans la liste mémorisée dans ledit module externe de sécurité, sinon, perturber l'accès auxdites données.

Préférentiellement, la configuration est mise en oeuvre uniquement lorsque l'utilisateur connecte un module externe de sécurité à un équipement récepteur.

Dans un mode préféré de réalisation, le procédé selon l'invention comporte une étape dans laquelle l'opérateur transmet à l'équipement récepteur une signalisation pour gérer la phase de contrôle comportant au moins l'une des consignes suivantes :
- activer la phase de contrôle à une date ou après un délai programmés,
- désactiver la phase de contrôle à une date ou après un délai programmés,
- spécifier une date absolue (respectivement un délai) à partir de laquelle (respectivement au bout duquel) l'activation ou la désactivation de la phase de contrôle est déclenchée,
- annuler ladite date programmée (respectivement ledit délai programmé).

Dans une première variante, l'opérateur transmet en outre à l'équipement récepteur une signalisation comportant un message de suppression de la liste des identifiants mémorisés dans l'équipement récepteur.

Ledit message de signalisation est transmis audit équipement récepteur via un message EMM (Entitlement Management Message, en anglais) spécifique à cet équipement récepteur.

Cette signalisation peut être transmise à un groupe d'équipements récepteurs via un message EMM spécifique audit groupe d'équipements récepteurs.

Dans une deuxième variante, l'opérateur transmet en outre au module externe de sécurité une signalisation comportant un message de suppression de la liste des identifiants mémorisés dans ce module externe de sécurité. Ledit message de signalisation est transmis audit module externe de sécurité via un message EMM spécifique, et peut être transmis à un groupe de modules externes de sécurité via un message EMM spécifique audit groupe de modules externes de sécurité.

Selon une autre caractéristique du procédé selon l'invention, l'opérateur transmet, d'une part, à un équipement récepteur la liste des M identifiants des modules externes de sécurité via un message EMM spécifique audit équipement récepteur, et d'autre part, à un module externe de sécurité la liste des N identifiants d'équipements récepteurs via un message EMM spécifique audit module externe de sécurité.

Selon une autre variante, l'opérateur transmet, d'une part, à un groupe d'équipements récepteurs la liste des M identifiants de modules externes de sécurité via un message EMM spécifique audit groupe d'équipements récepteurs, et d'autre part, à un groupe de modules externes de sécurité la liste des N identifiants d'équipements récepteurs via un message EMM spécifique audit groupe de modules externes de sécurité.

Dans une autre variante de réalisation, l'opérateur transmet à un groupe d'équipements récepteurs un message de signalisation pour la phase de contrôle dans un flux privé qui est traité par un logiciel dédié exécutable dans chaque équipement récepteur en fonction de l'identifiant dudit équipement récepteur.

Alternativement, la liste d'identifiants de modules externes de sécurité est transmise dans un flux privé à un groupe d'équipements récepteurs et traitée par un logiciel dédié exécutable dans chaque équipement récepteur en fonction de l'identifiant dudit équipement récepteur, et la liste d'identifiants d'équipements récepteurs est transmise à un groupe de modules externes de sécurité dans un flux privé qui est traité par un logiciel dédié exécutable dans chacun desdits modules externes de sécurité ou dans l'équipement récepteur auquel est connecté un desdits modules externes de sécurité, en fonction de l'identifiant dudit module externe de sécurité.

Dans un exemple d'application du procédé selon l'invention, les données numériques représentent des programmes audiovisuels distribués en clair ou sous forme embrouillée.

Selon une caractéristique supplémentaire, la liste des identifiants des M modules de sécurité mémorisés dans un équipement récepteur est chiffrée, et la liste des identifiants des N équipements récepteurs mémorisés dans un module externe de sécurité est chiffrée.

Avantageusement, le procédé selon l'invention comporte en outre un mécanisme destiné à empêcher l'utilisation d'un EMM transmis à un même module externe de sécurité ou à un même équipement récepteur.

Les messages EMM spécifiques à un module de sécurité ou à un équipement récepteur présentent le format suivant :

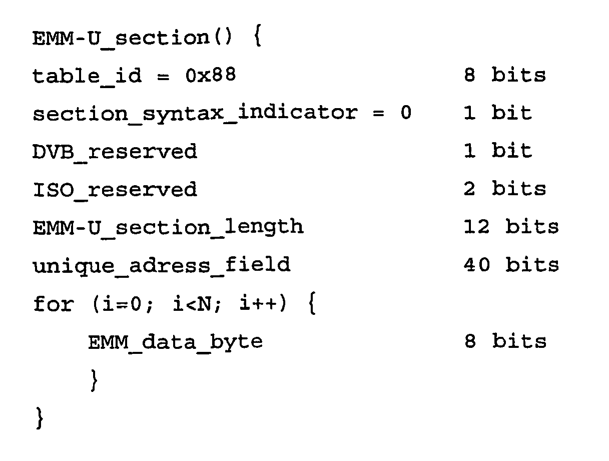

Les messages EMM concernant tous les modules externes de sécurité ou tous les équipements récepteurs présentent le format suivant :

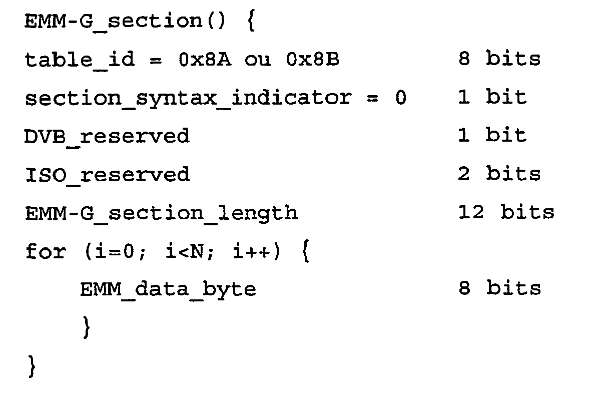

Les messages EMM spécifique à un sous-groupe de modules externes de sécurité ou un sous-groupe d'équipements récepteurs présentent le format suivant :

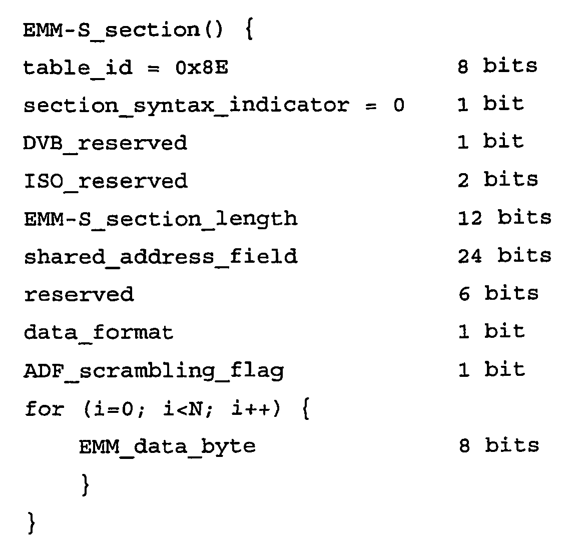

Le procédé selon l'invention est mis en oeuvre dans un système de contrôle d'accès comportant une pluralité d'équipements récepteurs ayant chacun un identifiant unique et susceptibles de coopérer avec une pluralité de modules externes de sécurité ayant chacun un identifiant unique, chaque module externe de sécurité comportant des informations relatives aux droits d'accès d'un abonné à des données numériques distribuées par un opérateur, ce système comportant également une plateforme de gestion commerciale communiquant avec lesdits équipements récepteurs et avec lesdits modules externes de sécurité. Ce système comporte en outre :
- un premier module agencé dans ladite plate-forme de gestion commerciale et destiné à générer des requêtes d'appariement,
- et un deuxième module agencé dans lesdits équipements récepteurs et les modules externes de sécurité et destiné à traiter lesdites requêtes pour préparer une configuration de l'appariement.

Le procédé selon l'invention est utilisable dans une architecture dans laquelle l'équipement récepteur comporte un décodeur et le module externe de sécurité comporte une carte de contrôle d'accès dans laquelle sont mémorisées des informations relatives aux droits d'accès d'un abonné à des données numériques distribuées par un opérateur. Dans ce cas, l'appariement est effectué entre ledit décodeur et ladite carte.

Alternativement, le procédé selon l'invention peut être utilisé dans une architecture dans laquelle l'équipement récepteur comporte un décodeur et le module externe de sécurité comporte une interface de sécurité amovible munie d'une mémoire non volatile et destinée à coopérer, d'une part, avec le décodeur, et d'autre part, avec une pluralité de cartes de contrôle d'accès conditionnel pour gérer l'accès à des données numériques distribuées par un opérateur. Dans ce cas, l'appariement est effectué entre ledit décodeur et ladite interface de sécurité amovible.

Le procédé selon l'invention peut également être utilisé dans une architecture dans laquelle l'équipement récepteur comporte un décodeur muni d'une interface de sécurité amovible ayant une mémoire non volatile et destinée à coopérer, d'une part, avec ledit décodeur, et d'autre part, avec une pluralité de cartes de contrôle d'accès conditionnel. Dans ce cas, l'appariement est réalisé entre ladite interface de sécurité amovible et lesdites cartes de contrôle d'accès.

L'invention concerne également un équipement récepteur susceptible d'être apparié avec une pluralité de modules externes de sécurité pour gérer l'accès à des données numériques distribuées par un opérateur. Cet équipement récepteur comporte :
- une mémoire non volatile destinée à mémoriser une liste de modules externes de sécurité.
- des moyens pour vérifier si l'identifiant d'un module externe de sécurité connecté audit équipement est présent dans la liste mémorisée dans ladite mémoire non volatile.

Dans un premier mode de réalisation, cet équipement récepteur comporte un décodeur et le module externe de sécurité est une carte de contrôle d'accès comportant des informations relatives aux droits d'accès d'un abonné auxdites données numériques, l'appariement étant dans ce cas effectué entre ledit décodeur et ladite carte.

Dans un deuxième mode de réalisation, cet équipement récepteur comporte un décodeur et le module externe de sécurité est une interface de sécurité amovible munie d'une mémoire non volatile et destinée à coopérer, d'une part, avec ledit décodeur, et d'autre part, avec une pluralité de cartes de contrôle d'accès conditionnel, pour gérer l'accès auxdites données numériques, l'appariement étant dans ce cas effectué entre ledit décodeur et ladite interface de sécurité amovible.

Dans un troisième mode de réalisation, cet équipement récepteur comporte un décodeur muni d'une interface de sécurité amovible ayant une mémoire non volatile et destinée à coopérer, d'une part, avec ledit décodeur, et d'autre part, avec une pluralité de cartes de contrôle d'accès conditionnel et l'appariement est réalisé entre ladite interface de sécurité amovible et lesdites cartes de contrôle d'accès.

L'invention concerne également un décodeur susceptible de coopérer avec une pluralité de modules externes de sécurité pour gérer l'accès à des programmes audiovisuels distribués par un opérateur, chaque module externe de sécurité ayant un identifiant unique et comportant au moins un algorithme de traitement de données. Ce décodeur comporte :
- une mémoire non volatile destinée à mémoriser une liste de modules externes de sécurité,
- des moyens pour vérifier si l'identifiant d'un module externe de sécurité connecté audit décodeur est présent dans la liste mémorisée dans ladite mémoire non volatile.

Dans une première variante, lesdits modules externes de sécurité sont des cartes de contrôle d'accès dans lesquelles sont mémorisées des informations relatives aux droits d'accès d'un abonné à des données numériques distribuées par un opérateur.

Dans une deuxième variante, lesdits modules externes de sécurité sont des interfaces de sécurité amovibles comportant une mémoire non volatile et destinées à coopérer, d'une part, avec le décodeur, et d'autre part, avec une pluralité de cartes de contrôle d'accès conditionnel pour gérer l'accès à des données numériques distribuées par un opérateur.

L'invention concerne également une interface de sécurité amovible destinée à coopérer, d'une part, avec un équipement récepteur, et d'autre part, avec une pluralité de cartes de contrôle d'accès conditionnel, pour gérer l'accès à des données numériques distribuées par un opérateur, chaque carte ayant un identifiant unique et comportant des informations relatives aux droits d'accès d'un abonné auxdites données numériques.

Cette interface comporte :
- une mémoire non volatile destinée à mémoriser une liste de cartes d'abonnés,
- des moyens pour vérifier si l'identifiant d'une carte associée à ladite interface est présent dans la liste mémorisée dans ladite mémoire non volatile.

Dans un premier exemple de réalisation, l'interface amovible est une carte PCMCIA (pour Personal Computer Memory Card International Association) comportant un logiciel de désembrouillage de données numériques.

Dans un deuxième exemple de réalisation, l'interface amovible est un logiciel exécutable soit dans l'équipement récepteur soit dans une carte de contrôle d'accès.

Le procédé est piloté par un programme d'ordinateur exécutable sur N équipements récepteurs susceptibles d'être appariés avec M modules externes de sécurité ayant chacun un identifiant unique et dans lesquels sont stockées des informations relatives aux droits d'accès d'un abonné à des données numériques distribuées par un opérateur, ce programme comporte des instructions pour mémoriser dans chaque module externe de sécurité une liste d'identifiants d'une partie ou de l'ensemble des N équipements récepteurs, et des instructions pour mémoriser dans chaque équipement récepteur une liste d'identifiants d'une partie ou de l'ensemble des M modules externes de sécurité, des instructions pour contrôler l'identifiant d'un module externe de sécurité connecté à un équipement récepteur et l'identifiant dudit équipement récepteur, et des instructions pour interdire l'accès auxdites données si l'identifiant du module externe de sécurité connecté à l'équipement récepteur n'est pas présent dans la liste d'identifiants préalablement mémorisée dans cet équipement récepteur ou si l'identifiant dudit équipement récepteur n'est pas présent dans la liste d'identifiants préalablement mémorisée dans ledit module externe de sécurité.

### BRÈVE DESCRIPTION DES DESSINS

D'autres caractéristiques et avantages de l'invention ressortiront de la description qui va suivre, prise à titre d'exemple non limitatif en référence aux figures annexées dans lesquelles :
- la figure 1 représente une première architecture système pour la mise en oeuvre de l'appariement selon l'invention,
- la figure 2 représente une deuxième architecture système pour la mise en oeuvre de l'appariement selon l'invention,
- la figure 3 représente une troisième architecture système pour la mise en oeuvre de l'appariement selon l'invention;
- la figure 4 représente la structure des messages EMM_décodeur de configuration et d'utilisation des fonctionnalités d'appariement selon l'invention,
- la figure 5 représente la structure des messages EMM_carte de configuration des fonctionnalités d'appariement selon l'invention,
- la figure 6 est un diagramme fonctionnel représentant schématiquement les états de la fonction d'appariement embarquée dans un équipement récepteur,
- la figure 7 représente un organigramme illustrant un mode particulier de mise en oeuvre de l'appariement selon l'invention.

### EXPOSÉ DÉTAILLÉ DE MODES DE RÉALISATION PARTICULIERS

L'invention va maintenant être décrite dans le cadre d'une application dans laquelle un opérateur diffusant des programmes audiovisuels met en oeuvre le procédé selon l'invention pour limiter l'utilisation de son parc d'équipements récepteurs à ses propres abonnés.

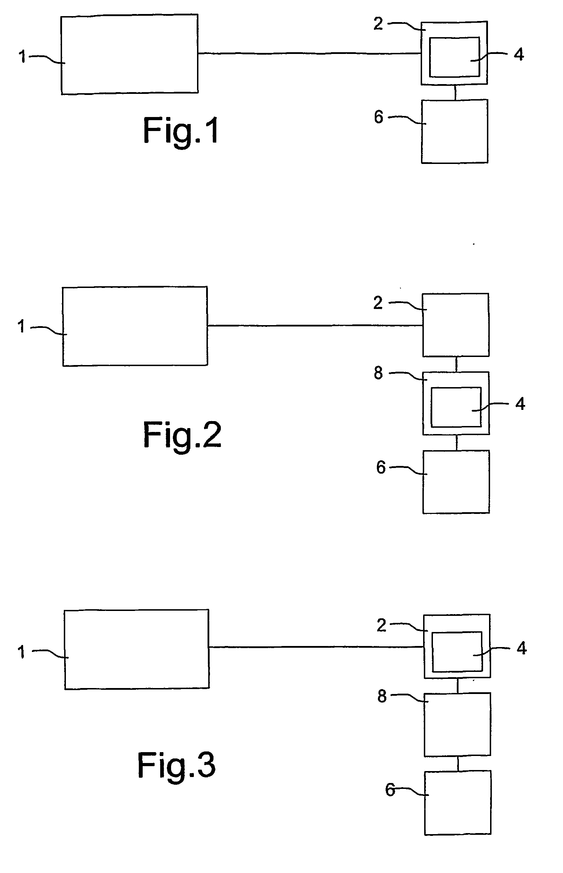

Le procédé peut être mis en oeuvre dans trois architectures distinctes illustrées respectivement par les figures 1, 2 et 3. Les éléments identiques dans ces trois architectures seront désignés par des références identiques.

La gestion de l'appariement est réalisée à partir d'une plateforme commerciale 1 contrôlée par l'opérateur et communiquant avec l'équipement récepteur installé chez l'abonné.

Dans la première architecture, illustrée par la figure 1, l'équipement récepteur comporte un décodeur 2 dans lequel est installé un logiciel de contrôle d'accès 4, et le module externe de sécurité est une carte de contrôle d'accès 6 comportant des informations relatives aux droits d'accès d'un abonné aux programmes audiovisuels diffusés. Dans ce cas, l'appariement est effectué entre le décodeur 2 et la carte 6.

Dans la deuxième architecture illustrée par la figure 2, l'équipement récepteur comporte un décodeur 2, non dédié au contrôle d'accès, et le module externe de sécurité est une interface de sécurité amovible 8 munie d'une mémoire non volatile et dans laquelle est installé le logiciel de contrôle d'accès 4. Cette interface 8 coopère, d'une part, avec ledit décodeur 2, et d'autre part, avec une carte 6 parmi une pluralité de cartes de contrôle d'accès conditionnel, pour gérer l'accès auxdites programmes audiovisuels.

Dans cette architecture, l'appariement est réalisé entre ladite interface de sécurité amovible 8 et ladite carte de contrôle d'accès 6.

Dans la troisième architecture, illustrée par la figure 3, l'équipement récepteur comporte un décodeur 2 dans lequel est installé un logiciel de contrôle d'accès 4 et qui est connecté à une interface de sécurité amovible 8 ayant une mémoire non volatile et destinée à coopérer, d'une part, avec ledit décodeur 2, et d'autre part, avec une carte 6 parmi une pluralité de cartes de contrôle d'accès conditionnel.

Dans ce cas, l'appariement est effectué entre le décodeur 2 et l'interface de sécurité amovible 8.

La configuration et l'utilisation par l'opérateur de l'appariement résultent de commandes émises par la plateforme de gestion commerciale 1 installée chez l'opérateur.

La description qui suit concerne la mise en oeuvre de l'invention dans le cas d'appariement de N décodeurs dédiés 2 avec M cartes 6. Les étapes mises en oeuvre s'appliquent aux trois architectures décrites ci-dessus.

A la sortie d'usine des N décodeurs 2, comme après un téléchargement du logiciel de contrôle d'accès 4 dans chaque décodeur 2, tous les traitements de l'appariement sont inactifs. En particulier :
- aucun identifiant de carte n'est mémorisé dans les décodeurs 2,
- le contrôle par les décodeurs 2 des identifiants des cartes 6 n'est pas actif,
- le contrôle par les décodeurs 2 de la présence de leur propre identifiant dans les cartes 6 n'est pas actif.

De même, à la sortie d'usine des M cartes 6, aucun identifiant de décodeur 2 n'est mémorisé dans les cartes 6.

L'appariement peut alors être configuré et utilisé dans les N décodeurs 2 et dans les M cartes 6 par une requête de l'opérateur via la plateforme de gestion 1 qui émet :
- vers les N décodeurs 2 des messages EMM_décodeur dédiés à l'appariement.
- vers les M cartes 6 des messages EMM_carte dédiés à l'appariement. Ces messages EMM_carte sont émis vers les cartes 6 directement ou intégrés dans des messages EMM_décodeurs.

Les messages EMM_décodeurs permettent d'effectuer les tâches suivantes :
- activer dans les N décodeurs 2 la fonction d'appariement. Dans ce cas chaque décodeur vérifie si l'identifiant d'une carte 6 insérée dans le lecteur de carte du décodeur fait partie des identifiants qu'il a mémorisés et que l'identifiant de ce décodeur 2 fait partie des identifiants de décodeurs mémorisés dans cette carte 6. Si ce n'est pas le cas, une perturbation est appliquée dans l'accès aux données.
- désactiver dans les N décodeurs 2 la fonction d'appariement. Dans ce cas, chaque décodeur 2 ne contrôle ni son identifiant ni celui de la carte.
- charger dans les N décodeurs 2 la liste des M identifiants de cartes 6 appariées à ces décodeurs.
- effacer les identifiants de cartes 6 déjà mémorisés dans les N décodeurs 2.

Les messages EMM_carte permettent de:
- charger dans les M cartes 6 la liste des N identifiants de décodeurs 2 appariés à ces cartes.
- effacer les identifiants des décodeurs 2 déjà mémorisés dans les M cartes 6.

### ADRESSAGE DES MESSAGES EMM

Les messages EMM permettant la configuration et l'utilisation des fonctionnalités liées à l'appariement selon le procédé de l'invention sont émis dans une voie EMM d'un multiplex numérique tel que défini par le standard MPEG2/Système et les standards DVB/ETSI.

Cette voie peut diffuser des EMM référençant une adresse de carte(s) permettant de les destiner directement :
- à une carte particulière,
- aux cartes d'un groupe particulier,
- à toutes les cartes,

Cette voie peut diffuser également des EMM référençant une adresse de décodeur(s) permettant de les destiner directement :
- à un décodeur particulier,
- à un groupe particulier de décodeurs,
- à tous les décodeurs,

Les messages destinés à une carte particulière ou à un décodeur particulier sont des EMM-U présentant la structure suivante :

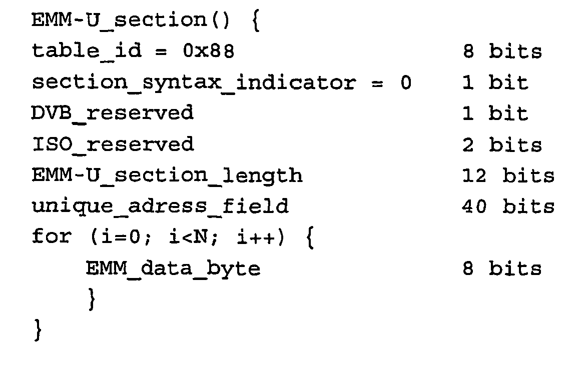

Le paramètre unique_adress_field est l'adresse unique d'une carte dans un EMM-U carte ou l'adresse unique d'un décodeur dans un EMM-U décodeur.

Les messages destinés à des cartes d'un groupe particulier de cartes ou à des décodeurs d'un groupe particulier de décodeurs sont des EMM-S présentant la structure suivante :

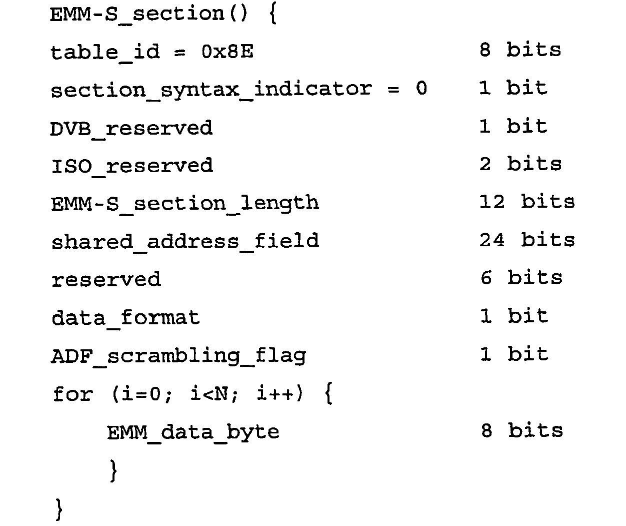

Le paramètre shared_adress_field est l'adresse du groupe de cartes dans un EMM-S carte ou l'adresse du groupe de décodeurs dans un EMM-S décodeur. Un décodeur d'un groupe ou une carte d'un groupe est concerné(e) par le message si en outre il (elle) est explicitement désigné(e) dans un champ ADF contenu dans EMM_data_byte et pouvant être chiffré selon l'information ADF_scrambling_flag.

Les messages destinés à toutes les cartes ou à tous les décodeurs sont des EMM-G présentant la structure suivante :

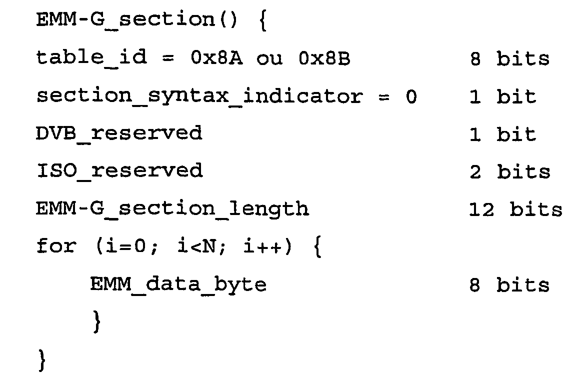

### CONTENU DES MESSAGES EMM décodeur

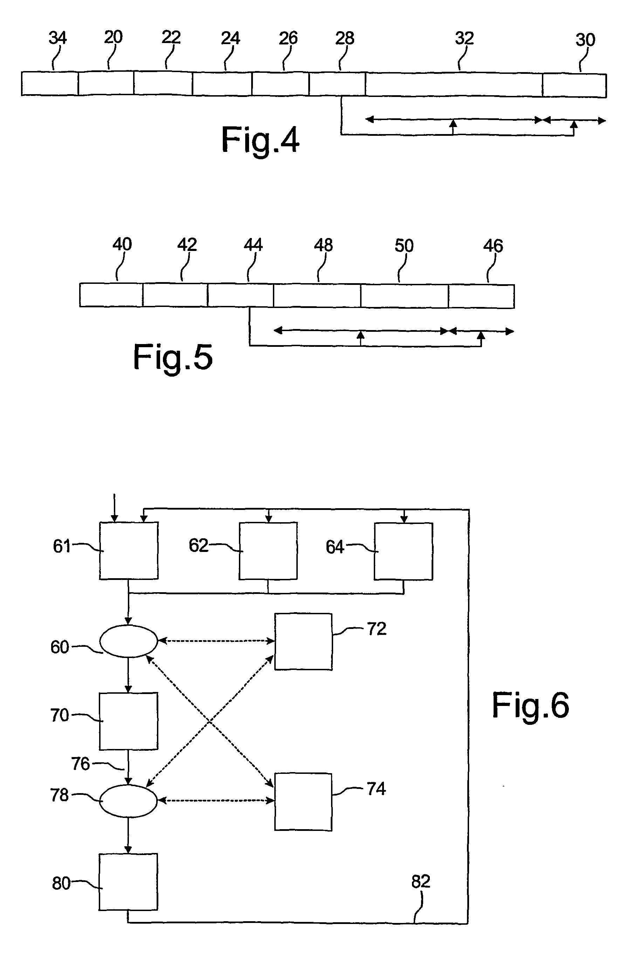

La figure 4 illustre schématiquement le contenu des données EMM_data_byte d'un message EMM_décodeur d'appariement. Ce contenu dépend de la fonction à exécuter par un décodeur 2 pour la configuration ou l'utilisation de l'appariement.

Les données EMM_data_byte incluent les paramètres fonctionnels suivants :
- ADF 20 : complément d'adressage d'un décodeur dans un groupe de décodeurs ; ce paramètre est utile en cas d'adressage par groupe sinon il peut être omis ; il peut être chiffré.
- SOID 22 : identification de message d'appariement selon l'invention, parmi d'autres types de message.
- OPID/NID 24 : identification du parc de décodeurs et du signal de l'opérateur.
- TIME 26 : données d'horodatage de l'émission du message ; ce paramètre est utilisé pour éviter le rejeu du message par un même décodeur
- CRYPTO 28 : identification des fonctions de protection cryptographique appliquées aux paramètres FUNCTIONS 32 ; les paramètres FUNCTIONS peuvent être chiffrés et protégés par une redondance cryptographique 30.
- FUNCTIONS 32 : ensemble des paramètres décrivant la configuration et l'utilisation de l'appariement.
- STBID 34 : adresse unique du décodeur concerné par le message. Ce paramètre est présent dans un EMM-U décodeur, sinon il peut être omis.

Les paramètres fonctionnels ci-dessus sont organisés librement dans les données EMM_data_byte d'un message EMM_décodeur. Une implémentation préférée est la combinaison de ces paramètres par structure T L V (Type Longueur Valeur).

### CONTENU DES MESSAGES EMM carte

La figure 5 illustre schématiquement le contenu des données EMM_data_byte d'un message EMM_Carte d'appariement. Ce contenu permet d'inscrire, modifier ou effacer une liste des identifiants de terminaux.

Les données EMM_data_byte incluent les paramètres fonctionnels suivants :
- SOID 40 : identification de l'opérateur.
- ADF 42 : complément d'adressage d'une carte dans un groupe de cartes ; ce paramètre est utile en cas d'adressage par groupe sinon il peut être omis ; il peut être chiffré.
- CRYPTO 44 : identification des fonctions de protection cryptographique appliquées au paramètre LDA 48 et aux autres paramètres 50 ; les paramètres 48 et 50 peuvent être chiffrés et protégés par une redondance cryptographique 46.
- LDA 48 (Liste de décodeurs autorisées) : ce paramètre contient la liste des identifiants de décodeurs avec lesquels la carte peut fonctionner.

Les données EMM_data_byte peuvent en outre contenir d'autres paramètres 50 concernant des fonctions de la carte autres que l'appariement.

Les paramètres présents dans les données EMM_data_byte sont organisés librement dans ces données d'un message EMM carte. Une implémentation préférée est la combinaison de ces paramètres par structure T L V (Type Longueur Valeur).

### CONFIGURATION ET UTILISATION DE L'APPARIEMENT

L'ensemble de paramètres FUNCTIONS 32 dans un EMM_décodeur décrit la configuration et l'utilisation de l'appariement selon l'invention. Cet ensemble de paramètres est une combinaison quelconque des paramètres fonctionnels suivants :
- MODE : ce paramètre active, désactive ou réinitialise la solution d'appariement selon l'invention. Après désactivation, le décodeur ne contrôle pas l'identifiant d'une carte insérée mais conserve la liste des identifiants mémorisés. Après réinitialisation, le décodeur ne contrôle pas l'identifiant d'une carte insérée et n'a plus d'identifiants de cartes mémorisés
- LCA (Liste de cartes autorisées) : ce paramètre charge dans un décodeur la liste des identifiants de cartes avec lesquelles il peut fonctionner
- Perturbation : ce paramètre décrit la perturbation à appliquer par le décodeur dans l'accès aux données en cas de carte non appariée avec le décodeur
- Date/Délai : ce paramètre caractérise la date ou le délai d'activation ou de désactivation de l'appariement

Les paramètres fonctionnels ci-dessus sont organisés librement dans l'ensemble de paramètres FUNCTIONS 32. Une implémentation préférée est la combinaison de ces paramètres par structure T L V (Type Longueur Valeur).

En outre, dans certains types de service tels qu'une forme d'appariement un décodeur avec une carte, un EMM_décodeur peut transporter un ou plusieurs EMM_cartes. Dans ce cas, l'EMM_carte (les ENiM_cartes) est (sont) inclus dans l'ensemble de paramètres FUNCTIONS 32 de façon clairement identifiable par le décodeur qui pourra extraire et fournir à la carte insérée le (les) EMM_carte(s). Une implémentation préférée d'inclusion d'EMM_carte dans l'ensemble de paramètres FUNCTIONS 32 d'un EMM_décodeur est l'usage d'une structure T L V particulière contenant le (les) EMM_carte(s) avec toutes les données d'adressage afférentes.

Une autre utilisation d'EMM_carte dans un EMM_décodeur permet de mémoriser dans la carte que cet EMM_décodeur a déjà été traité par le décodeur, afin d'éviter le rejeu sur un autre décodeur et permettant le traitement unique de cet EMM par un seul décodeur ; sémantiquement ces données signifient « Déjà traité » et sont vérifiées par le logiciel de contrôle d'accès 4 du décodeur 2 quand il traite cet EMM. Une réalisation préférée de ce mécanisme d'anti-rejeu est l'inscription de ces données dans un bloc de données FAC (Facilities Data Block en anglais) de la carte.

### FONCTIONNEMENT

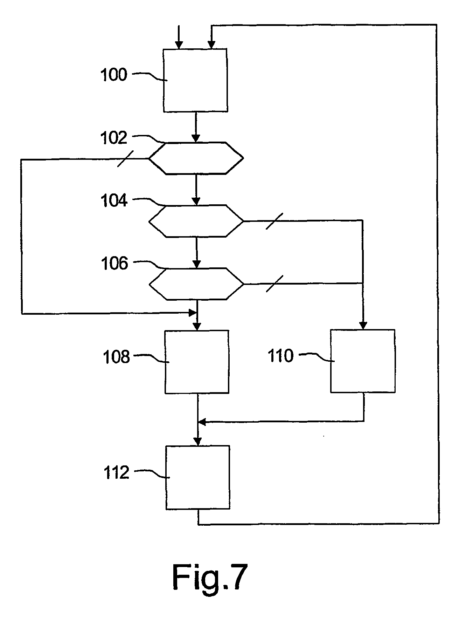

Le fonctionnement de l'appariement selon l'invention va maintenant être décrit par référence aux figures 6 et 7.

La figure 6 est un diagramme fonctionnel illustrant schématiquement les états de la fonction d'appariement du logiciel de contrôle d'accès 4 embarqué dans un décodeur 2.

La fonction d'appariement est dans l'état inactif 60 quand le logiciel de contrôle d'accès 4 vient d'être installé ou téléchargé 61 ou quand il a reçu de la plateforme de gestion 1 un ordre de désactivation de l'appariement 62 ou de réinitialisation de l'appariement 64. Dans cet état le logiciel de contrôle d'accès 4 accepte de fonctionner avec une carte 6 insérée dans le décodeur 2 sans vérifier son appariement avec cette carte.

Pour effectuer l'activation de l'appariement entre M décodeurs 2 et N cartes 6, l'opérateur active via la plateforme de gestion 1 :
- un traitement 70 pour définir le mode d'appariement (= actif), et le type de perturbation applicable dans l'accès aux données en cas d'échec de l'appariement,
- un traitement 72 pour définir la liste LCA à charger dans ces N décodeurs des identifiants des M cartes autorisées,
- un traitement 74 pour définir la liste LDA à charger dans ces M cartes des identifiants des N décodeurs autorisés

En fonction de ces informations la plateforme de gestion 1 génère et émet (flèche 76) :
- au moins un message EMM_décodeur pour charger dans la mémoire non volatile des N décodeurs 2 la liste LCA des cartes autorisées 6.
- au moins un message EMM_carte pour charger dans la mémoire non volatile des M cartes 6 la liste LDA des décodeurs autorisés
- au moins un message EMM_décodeur pour charger les paramètres de configuration dans la mémoire non volatile des N décodeurs 2.

La fonction d'appariement dans un décodeur 2 passe à l'état actif 78.

Lors d'une activation de la fonction d'appariement dans un décodeur 2 avec chargement de la liste LCA des cartes 6 autorisées et/ou de la liste LDA des décodeurs 2 autorisés, la prise en compte effective par un décodeur 2 des paramètres de configuration peut être différée dans le temps selon le paramètre Date/Délai pour garantir le chargement effectif de la liste LCA des cartes 6 autorisées dans un décodeur 2 et de la liste LDA des décodeurs 2 autorisés dans une carte 6.

Lors d'une réactivation de la fonction d'appariement dans un décodeur 2, si la liste LCA des cartes 6 autorisées et/ou la liste LDA des décodeurs 2 autorisés ne nécessite pas de modification, les EMM correspondants ne sont ni générés ni émis.

L'opérateur peut désactiver (étape 80) l'appariement dans un décodeur 2, à partir la plateforme de gestion 1 qui génère et émet (flèche 82) un message EMM adressant le ou les décodeurs 2 concernés et contenant un ordre de désactivation sans effacement du contexte d'appariement 62 ou un ordre de RAZ du contexte d'appariement 64.

La fonction d'appariement dans un décodeur 2 passe à l'état inactif 60.

La prise en compte effective par un décodeur 2 de l'ordre de désactivation peut être différée dans le temps selon le paramètre Date/Délai.

Quel que soit l'état inactif 60 ou actif 78 de la fonction d'appariement, elle peut recevoir de la plateforme de gestion 1 une liste de cartes 6 autorisées LCA par EMM décodeur (étape 72) ou une liste de décodeurs 2 autorisés LDA (étape 74).

La prise en compte d'une des M cartes 6 par la fonction d'appariement d'un des N décodeurs 2 est décrite dans l'organigramme de la figure 7.

A l'insertion (étape 100) d'une carte 6 dans le décodeur 2, le logiciel de contrôle d'accès 4 embarqué dans le décodeur teste (étape 102) si la fonction d'appariement est dans l'état actif 78.

Si la fonction d'appariement dans le décodeur est dans l'état inactif 60, le décodeur accepte de fonctionner avec la carte insérée (108).

Si la fonction d'appariement dans le décodeur est dans l'état actif 78, le logiciel de contrôle d'accès :
- lit l'identifiant de la carte insérée et vérifie (étape 104) si cet identifiant est dans la liste des cartes 6 autorisées mémorisées dans le décodeur 2,
- lit dans la carte insérée la liste des décodeurs autorisés et vérifie (étape 106) si l'identifiant du décodeur 2 est présent dans cette liste,

Les tests 104 et 106 peuvent être exécutés dans n'importe quel ordre.

Si les résultats de ces deux tests d'identifiants 104 et 106 sont positifs, le logiciel de contrôle d'accès 4 accepte de fonctionner avec la carte 6 insérée (étape 108). L'accès aux programmes diffusés est alors possible, sous réserve de conformité des autres conditions d'accès attachées à ces programmes.

Si le résultat d'au moins un des tests 104 et 106 n'est pas positif, le logiciel de contrôle d'accès 4 refuse de fonctionner avec la carte 6 insérée et applique (étape 110) la perturbation dans l'accès aux données telle que définie par l'opérateur. Une telle perturbation peut consister à bloquer l'accès aux programmes diffusés. Elle peut être accompagnée de l'affichage sur l'écran du terminal auquel est associé le décodeur d'un message invitant l'abonné à insérer une autre carte 6 dans le décodeur 2.

Quand la carte 2 est extraite (étape 112) du décodeur 2, le logiciel de contrôle d'accès passe en attente de l'insertion d'une carte (étape 100)

La perturbation appliquée à l'étape 110 dans l'accès aux données en cas de défaut d'appariement peut être de différente nature telle que :
- Arrêt audio et vidéo sur les chaînes cryptées (obtenu par non soumission des ECM à la carte pour calcul des CW) ;
- Arrêt audio et vidéo sur les chaînes en clair et analogiques (obtenu par message au middleware) ;
- Envoi d'un message au middleware du terminal (exemple : message Open TV).

Cette perturbation peut être utilisée également pour provoquer le blocage de décodeurs volés.

Dans le cas décrit dans la figure 2 où le logiciel de contrôle d'accès 4 est exécuté dans l'interface amovible 8 connectée à un décodeur 2, l'automate décrit dans la figure 4 et l'organigramme décrit dans la figure 5 s'appliquent directement au logiciel de contrôle d'accès embarqué 4 dans cette interface amovible 8.

## Revendications

1. Procédé d'appariement d'un nombre N d'équipements récepteurs (2) de données avec un nombre M de modules externes de sécurité (6, 8), chaque équipement récepteur (2) étant muni d'un identifiant unique, et chaque module externe de sécurité (6, 8) ayant un identifiant unique, procédé **caractérisé en ce qu'**il comporte une phase de configuration comportant les étapes suivantes :
- mémoriser dans chaque module externe de sécurité (6, 8) une liste d'identifiants d'équipements récepteurs (2),
- mémoriser dans chaque équipement récepteur (2) une liste d'identifiants de modules externes de sécurité (6, 8),
et une phase de contrôle consistant à autoriser l'accès aux données si l'identifiant d'un module externe de sécurité (6, 8) connecté à un équipement récepteur (2) est présent dans la liste mémorisée dans cet équipement récepteur (2), et si l'identifiant dudit équipement récepteur (2) est présent dans la liste mémorisée dans ledit module externe de sécurité (6, 8), sinon, perturber l'accès auxdites données.

2. Procédé selon la revendication 1, **caractérisé en ce que** la configuration est mise en oeuvre uniquement lorsque l'utilisateur connecte un module externe de sécurité (6, 8) à un équipement récepteur (2).

3. Procédé selon la revendication 1, **caractérisé en ce qu'**il comporte en outre une étape dans laquelle l'opérateur transmet à l'équipement récepteur (2), une signalisation pour gérer la phase de contrôle comportant au moins l'une des consignes suivantes :
- activer la phase de contrôle à une date ou après un délai programmés,
- désactiver la phase de contrôle à une date ou après un délai programmés,
- spécifier une date absolue (respectivement un délai) à partir de laquelle (respectivement au bout duquel) l'activation ou la désactivation de la phase de contrôle est déclenchée,
- annuler ladite date programmée (respectivement ledit délai programmé).

4. Procédé selon la revendication 1, **caractérisé en ce que** l'opérateur transmet en outre à l'équipement récepteur (2) une signalisation comportant un message de suppression de la liste des identifiants mémorisés dans l'équipement récepteur (2).

5. Procédé selon la revendication 1, **caractérisé en ce que** l'opérateur transmet en outre au module externe de sécurité (6, 8) une signalisation comportant un message de suppression de la liste des identifiants mémorisés dans ce module externe de sécurité (6, 8).

6. Procédé selon la revendication 1, **caractérisé en ce que** l'opérateur transmet à un équipement récepteur (2) la liste des M identifiants des modules externes de sécurité (6, 8) via un message EMM spécifique audit équipement récepteur (2).

7. Procédé selon la revendication 1, **caractérisé en ce que** l'opérateur transmet à un module externe de sécurité (6, 8) la liste des N identifiants d'équipements récepteurs (2) via un message EMM spécifique audit module externe de sécurité (6, 8).

8. Procédé selon la revendication 1, **caractérisé en ce que** l'opérateur transmet à un groupe d'équipements récepteurs (2) la liste des M identifiants de modules externes de sécurité (6, 8) via un message EMM spécifique audit groupe d'équipements récepteurs (2).

9. Procédé selon la revendication 1, **caractérisé en ce que** l'opérateur transmet à un groupe de modules externes de sécurité (6, 8) la liste des N identifiants d'équipements récepteurs (2) via un message EMM spécifique audit groupe de modules externes de sécurité (6, 8).

10. Procédé selon les revendications 3 ou 4, **caractérisé en ce que** l'opérateur fournit à un équipement récepteur (2) ledit message de signalisation via un message EMM spécifique audit équipement récepteur (2).

11. Procédé selon les revendications 3 ou 4, **caractérisé en ce que** l'opérateur fournit à un groupe d'équipements récepteurs (2) ledit message de signalisation via un message EMM spécifique audit groupe d'équipements récepteurs (2).

12. Procédé selon la revendication 5, **caractérisé en ce que** l'opérateur fournit à un module externe de sécurité ledit message de signalisation via un message EMM spécifique audit module externe de sécurité (2).

13. Procédé selon la revendication 5, **caractérisé en ce que** l'opérateur fournit à un groupe de modules externes de sécurité (6, 8) ledit message de signalisation via un message EMM spécifique audit groupe de modules externes de sécurité (6, 8).

14. Procédé selon les revendications 3 ou 4, **caractérisé en ce que** l'opérateur transmet à un groupe d'équipements récepteurs (2) dans un flux privé un message de signalisation pour la phase de contrôle, ledit flux privé étant traité par un logiciel dédié exécutable dans chaque équipement récepteur (2) en fonction de l'identifiant dudit équipement récepteur (2).

15. Procédé selon la revendication 1, **caractérisé en ce que** la liste d'identifiants de modules externes de sécurité (6, 8) est transmise dans un flux privé à un groupe d'équipements récepteurs (2) et traitée par un logiciel dédié exécutable dans chaque équipement récepteur (2) en fonction de l'identifiant dudit équipement récepteur (2).

16. Procédé selon la revendication 1, **caractérisé en ce que** la liste d'identifiants d'équipements récepteurs (2) est transmise à un groupe de modules externes.de sécurité (6, 8) dans un flux privé qui est traité par un logiciel dédié exécutable dans chacun desdits modules externes de sécurité (6, 8) ou dans l'équipement récepteur (2) auquel est connecté chacun desdits modules externes de sécurité (6, 8), en fonction de l'identifiant dudit module externe de sécurité (6, 8).

17. Procédé selon la revendication 1, **caractérisé en ce que** les données numériques sont distribuées en clair ou sous forme embrouillée.

18. Procédé selon la revendication 17, **caractérisé en ce que** les données numériques représentent des programmes audiovisuels.

19. Procédé selon la revendication 1, **caractérisé en ce que** la liste des identifiants des M modules de sécurité mémorisés dans un équipement récepteur (2) est chiffrée.

20. Procédé selon la revendication 1, **caractérisé en ce que** la liste des identifiants des N équipements récepteurs (2) mémorisés dans un module externe de sécurité (6, 8) est chiffrée.

21. Procédé selon l'une des revendications 6 à 13, **caractérisé en ce qu'**il comporte en outre un mécanisme destiné à empêcher l'utilisation d'un EMM transmis à un même module externe de sécurité (6, 8) ou à un même équipement récepteur (2).

22. Procédé selon les revendications 6, 7, 10 ou 12, **caractérisé en ce que** ledit EMM présente le format suivant :

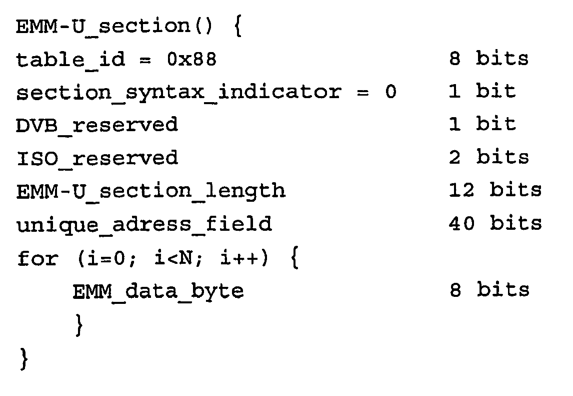

23. Procédé selon les revendications 8, 9, 11 ou 13, **caractérisé en ce que** ledit message EMM concerne tous les modules externes de sécurité (6, 8) ou tous les équipements récepteurs (2) et présente le format suivant :

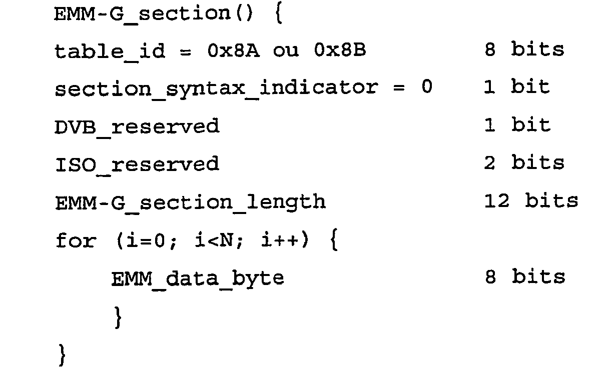

24. Procédé selon les revendications 8, 9, 11 ou 13, **caractérisé en ce que** ledit message EMM est spécifique à un sous-groupe de modules externes de sécurité (6, 8) ou un sous-groupe d'équipements récepteurs (2) et présente le format suivant :

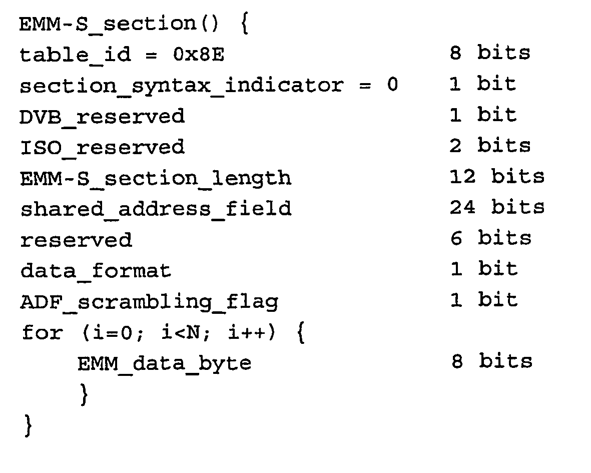

25. Procédé selon l'une quelconque des revendications 1 à 24, **caractérisé en ce que** l'équipement récepteur (2) comporte un décodeur et le module de sécurité externe (6, 8) comporte une carte de contrôle d'accès (6) dans laquelle sont mémorisées des informations relatives aux droits d'accès d'un abonné à des données numériques distribuées par un opérateur, et **en ce que** l'appariement est effectué entre ledit décodeur et ladite carte (6).

26. Procédé selon l'une quelconque des revendications 1 à 24, **caractérisé en ce que** l'équipement récepteur (2) comporte un décodeur et le module externe de sécurité (6, 8) comporte une interface de sécurité amovible (8) munie d'une mémoire non volatile et destinée à coopérer, d'une part, avec le décodeur, et d'autre part, avec une pluralité de cartes de contrôle d'accès (6) conditionnel pour gérer l'accès à des données numériques distribuées par un opérateur, et **en ce que** l'appariement est effectué entre ledit décodeur et ladite interface de sécurité amovible (8).

27. Procédé selon l'une quelconque des revendications 1 à 24, **caractérisé en ce que** l'équipement récepteur (2) comporte un décodeur muni d'une interface de sécurité amovible (8) ayant une mémoire non volatile et destinée à coopérer, d'une part, avec ledit décodeur, et d'autre part, avec une pluralité de cartes de contrôle d'accès (6) conditionnel et **en ce que** l'appariement est réalisé entre ladite interface de sécurité amovible (8) lesdites cartes de contrôle d'accès (6).

28. Equipement récepteur susceptible d'être apparié avec une pluralité de modules externes de sécurité (6, 8) pour gérer l'accès à des données numériques distribuées par un opérateur, **caractérisé en ce qu'**il comporte :
- une mémoire non volatile destinée à mémoriser une liste de modules externes de sécurité (6, 8),
- des moyens pour vérifier si l'identifiant d'un module externe de sécurité (6, 8) connecté audit équipement est présent dans la liste mémorisée dans ladite mémoire non volatile.

29. Equipement selon la revendication 28, **caractérisé en ce qu'**il comporte un décodeur et **en ce que** le module externe de sécurité (6, 8) est une carte de contrôle d'accès (6) comportant des informations relatives aux droits d'accès d'un abonné auxdites données numériques, l'appariement étant effectué entre ledit décodeur et ladite carte (6).

30. Equipement selon la revendication 28, **caractérisé en ce qu'**il comporte un décodeur et **en ce que** le module externe de sécurité (6, 8) est une interface de sécurité amovible (8) munie d'une mémoire non volatile et destinée à coopérer, d'une part, avec ledit décodeur, et d'autre part, avec une pluralité de cartes de contrôle (6) d'accès conditionnel, pour gérer l'accès auxdites données numériques, l'appariement étant effectué entre ledit décodeur et ladite interface de sécurité amovible (8).

31. Equipement selon la revendication 28, **caractérisé en ce qu'**il comporte un décodeur muni d'une interface de sécurité amovible (8) ayant une mémoire non volatile et destinée à coopérer, d'une part, avec ledit décodeur, et d'autre part, avec une pluralité de cartes de contrôle (6) d'accès conditionnel et **en ce que** l'appariement est réalisé entre ladite interface de sécurité amovible (8) et lesdites cartes de contrôle d'accès (6).

32. Décodeur susceptible de coopérer avec une pluralité modules externes de sécurité (6, 8) pour gérer l'accès à des programmes audiovisuels distribués par un opérateur, chaque module externe de sécurité (6, 8) ayant un identifiant unique et comportant au moins un algorithme de traitement de données, décodeur **caractérisé en ce qu'**il comporte :
- une mémoire non volatile destinée à mémoriser une liste de modules externes de sécurité (6, 8),
- des moyens pour vérifier si l'identifiant d'un module externe de sécurité (6, 8) connecté audit décodeur est présent dans la liste mémorisée dans ladite mémoire non volatile.

33. Décodeur selon la revendication 32, **caractérisé en ce que** lesdits modules externes de sécurité (6, 8) sont des cartes de contrôle d'accès (6) dans lesquelles sont mémorisées des informations relatives aux droits d'accès d'un abonné à des données numériques distribuées par un opérateur.

34. Décodeur selon la revendication 32, **caractérisé en ce que** lesdits modules externes de sécurité (6, 8) sont des interfaces de sécurité amovible (8) comportant une mémoire non volatile et destinés à coopérer, d'une part, avec le décodeur, et d'autre part, avec une pluralité de cartes de contrôle (6) d'accès conditionnel pour gérer l'accès à des données numériques distribuées par un opérateur.

35. Interface de sécurité amovible destinée à coopérer, d'une part, avec un équipement récepteur (2), et d'autre part, avec une pluralité de cartes de contrôle (6) d'accès conditionnel, pour gérer l'accès à des données numériques distribuées par un opérateur, chaque carte ayant un identifiant unique et comportant des informations relatives aux droits d'accès d'un abonné auxdites données numériques, interface **caractérisée en ce qu'**elle comporte :
- une mémoire non volatile destinée à mémoriser une liste de cartes d'abonnés,
- des moyens pour vérifier si l'identifiant d'une carte associée à ladite interface est présent dans la liste mémorisée dans ladite mémoire non volatile.

36. Interface selon la revendication 35 **caractérisée en ce qu'**elle consiste en une carte PCMCIA comportant un logiciel de désembrouillage de données numériques.

37. Interface selon la revendication 35 **caractérisée en ce qu'**elle consiste en un logiciel.

38. Système de contrôle d'accès comportant une pluralité d'équipements récepteurs (2) ayant chacun un identifiant unique et susceptibles de coopérer avec une pluralité de modules externes de sécurité (6, 8) ayant chacun un identifiant unique, chaque module externe de sécurité (6, 8) comportant des informations relatives aux droits d'accès d'un abonné à des données numériques distribuées par un opérateur, ledit système comportant également une plateforme de gestion commerciale (1) communiquant avec lesdits équipements récepteurs (2) et avec lesdits modules externes de sécurité (6, 8), **caractérisé en ce qu'**il comporte en outre :
- un premier module agencé dans ladite plate-forme commerciale (1) et destiné à générer des requêtes d'appariement,
- et un deuxième module agencé dans lesdits équipements récepteurs (2) et dans lesdits modules externes de sécurité (6, 8) et destiné à traiter lesdites requêtes pour préparer une configuration de l'appariement.

39. Programme d'ordinateur exécutable sur N équipements récepteurs (2) susceptibles de coopérer avec M modules de sécurité (6, 8) ayant chacun un identifiant unique et dans lesquels sont stockées des informations relatives aux droits d'accès d'un abonné à des données numériques distribuées par un opérateur, **caractérisé en ce qu'**il comporte des instructions pour mémoriser dans chaque module externe de sécurité (6, 8) une liste d'identifiants d'une partie ou de l'ensemble des N équipements récepteurs 2), et des instructions pour mémoriser dans chaque équipement récepteur (2) une liste d'identifiants d'une partie ou de l'ensemble des M modules de sécurité (6, 8), des instructions pour contrôler l'identifiant d'un module de sécurité connecté à un équipement récepteur (2) et l'identifiant dudit équipement récepteur (2), et des instructions pour interdire l'accès auxdites données si l'identifiant du module de sécurité (6, 8) connecté à l'équipement récepteur (2) n'est pas présent dans la liste d'identifiants préalablement mémorisée dans cet équipement récepteur 2) ou si l'identifiant dudit équipement récepteur (2) n'est pas présent dans la liste d'identifiants préalablement mémorisée dans ledit module externe de sécurité (6, 8).

## Claims

1. Method for matching a number N of data reception equipment (2) with a number M of external security modules (6, 8), each reception equipment (2) being provided with a unique identifier, and each external security module (6, 8) having a unique identifier, method **characterised in that** it comprises a configuration phase comprising the following steps:
- memorising a list of identifiers of reception equipment (2) in each external security module (6, 8),
- memorising a list of identifiers of external security module (6, 8) in each reception equipment (2),
and a check phase consisting of authorising access to data if the identifier of an external security module (6, 8) connected to a reception equipment (2) is present in the list memorised in this reception equipment (2), and if the identifier of said reception equipment (2) is present in the list memorised in said external security module (6, 8), otherwise disturbing access to said data.

2. Method set forth in claim 1, **characterised in that** the configuration is implemented only when the user connects an external security module (6, 8) to a reception equipment (2).

3. Method set forth in claim 1, **characterised in that** the method also comprises a step in which the operator transmits to the reception equipment (2) a signal to manage the check phase comprising at least one of the following set values:
- activating the check phase at a programmed date or after a programmed delay,
- deactivating the check phase at a programmed date or after a programmed delay,
- specifying an absolute date (respectively a delay) from which (respectively after which) the check phase is activated or deactivated,
- cancelling said programmed date (respectively said programmed delay).

4. Method set forth in claim 1, **characterised in that** the operator also transmits a signal to the reception equipment (2) containing a message to delete the list of identifiers memorised in the reception equipment (2).

5. Method set forth in claim 1, **characterised in that** the operator also transmits to the external security module (6, 8) a signal containing a message to delete the list of identifiers memorised in this external security module (6, 8).

6. Method set forth in claim 1, **characterised in that** the operator transmits the list of M identifiers of the external security modules (6, 8) to a reception equipment (2) through an EMM message specific to said reception equipment (2).

7. Method set forth in claim 1, **characterised in that** the operator transmits the list of identifiers of N reception equipment (2) to an external security module (6, 8) through an EMM message specific to said external security module (6, 8).

8. Method set forth in claim 1, **characterised in that** the operator transmits the list of M identifiers of external security modules (6, 8) to a group of reception equipment (2) through an EMM message specific to said group of reception equipment (2).

9. Method set forth in claim 1, **characterised in that** the operator transmits the list of identifiers of N reception equipment (2) to a group of external security modules (6, 8) through an EMM message specific to said group of external security modules (6, 8).

10. Method set forth in claim 3 or 4, **characterised in that** the operator supplies said signal message to a reception equipment (2) through an EMM message specific to said reception equipment (2).

11. Method set forth in claim 3 or 4, **characterised in that** the operator supplies said signal message to a group of reception equipment (2) through an EMM message specific to said group of reception equipment (2).

12. Method set forth in claim 5, **characterised in that** the operator supplies said signal message to an external security module through an EMM message specific to said external security module (2).

13. Method set forth in claim 5, **characterised in that** the operator supplies said signal message to a group of external security modules (6, 8) through an EMM message specific to said group of external security modules (6, 8).

14. Method set forth in claim 3 or 4, **characterised in** the operator transmits a signal message for the check phase to a group of reception equipment (2) in a private flow, said private flow being processed by a dedicated software executable in each reception equipment (2) as a function of the identifier of said reception equipment (2).

15. Method set forth in claim 1, **characterised in that** the list of identifiers of external security module (6, 8) is transmitted in a private flow to a group of reception equipment (2) and processed by a dedicated software executable in each reception equipment (2) as a function of the identifier of said reception equipment (2).

16. Method set forth in claim 1, **characterised in that** the list or identifiers of reception equipment (2) is transmitted to a group of external security modules (6, 8) in a private flow that is processed by a dedicated software in each of said external security modules (6, 8) or in the reception equipment (2) to which each of said external security modules ; (6, 8) is connected, as a function of the identifier of said external security module (6, 8).

17. Method set forth in claim 1, **characterised in that** digital data are distributed in plain text or in scrambled form.

18. Method set forth in claim 17, **characterised in that** digital data are audiovisual programs.

19. Method set forth in claim 1, **characterised in that** the list of identifiers of M security modules memorised in a reception equipment (2) is encrypted.

20. Method set forth in claim 1, **characterised in that** the list of identifiers of N reception equipment (2) memorised in an external security module (6, 8) is encrypted.

21. Method set forth in one of claims 6 to 13, **characterised in that** the method also includes a mechanism designed to prevent use of an EMM transmitted to the same external security module (6, 8) or to the same reception equipment (2).

22. Method set forth in claims 6, 7, 10 or 12, **characterised in that** said EMM is in the following format:

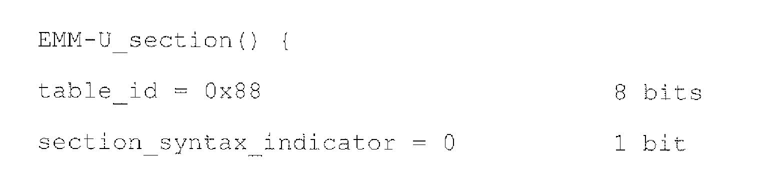

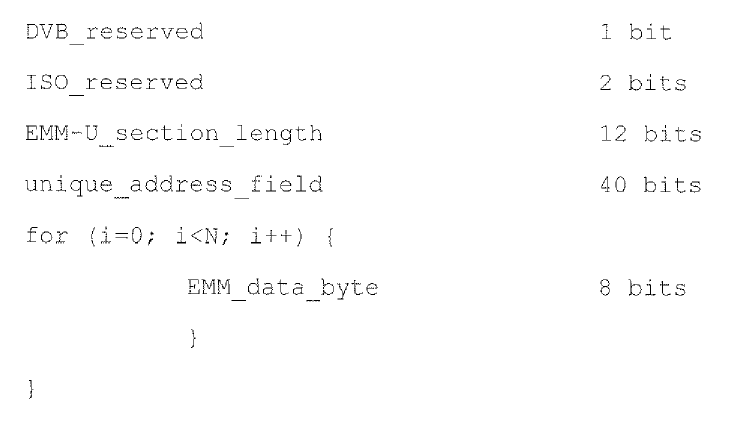

23. Method set forth in claims 8, 9, 11 or 13, **characterised in that** said EMM message concerns all external security modules (6, 8) or all reception equipment (2) and is in the following format:

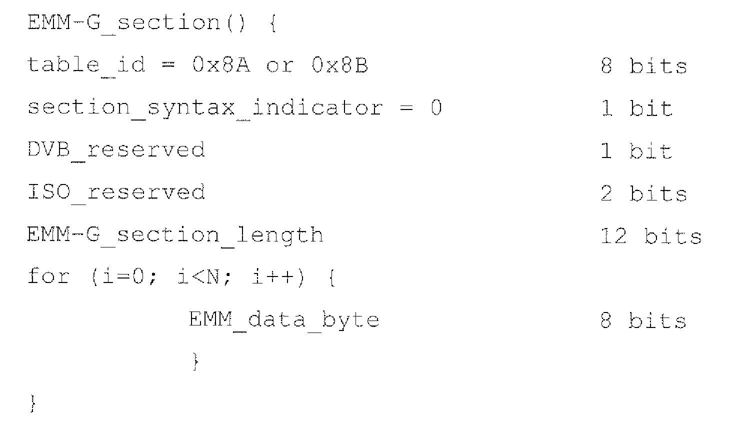

24. Method set forth in claims 8, 9, 11 or 13, **characterised in that** said EMM message is specific to a sub-group of external security modules (6, 8) or a sub-group of reception equipment (2) and is in the following format:

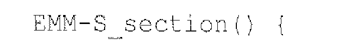

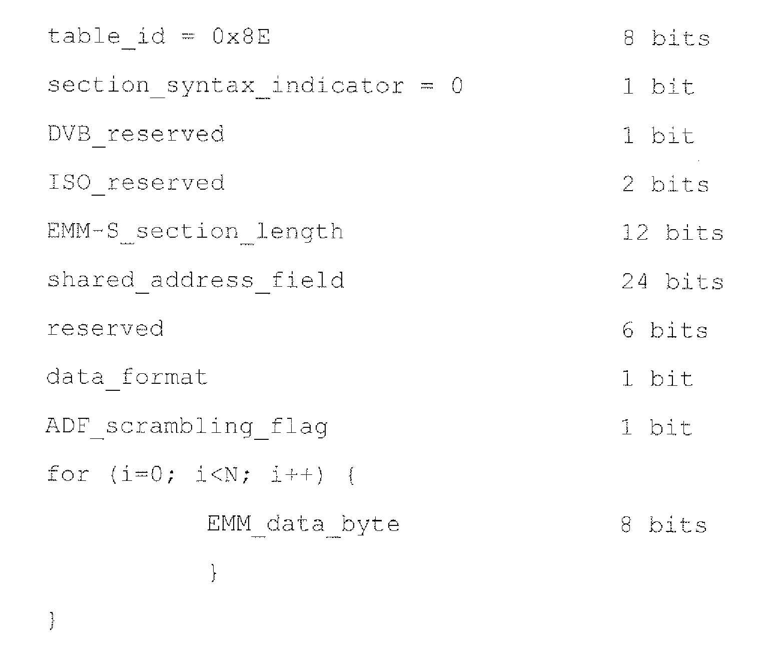

25. Method set forth in any one of claims 1 to 24, **characterised in that** the reception equipment (2) includes a decoder and the external security module (6, 8) includes an access control card (6) in which information about access rights of a subscriber to digital data distributed by an operator is memorised, and **in that** matching is done between said decoder and said card (6).

26. Method set forth in any one of claims 1 to 24, **characterised in that** the reception equipment (2) includes a decoder and the external security module (6, 8) includes a removable security interface (8) provided with a non-volatile memory and designed to cooperate firstly with the decoder, and secondly with a plurality of conditional access control cards (6) to manage access to digital data distributed by an operator, and **in that**, said matching is done between said decoder and said removable security interface (8).

27. Method set forth in any one of claims 1 to 24, **characterised in that** the reception equipment (2) includes a decoder provided with a removable security interface (8) with a non-volatile memory and designed to cooperate firstly with said decoder, and secondly with a plurality of conditional access control cards (6) and **in that**, said matching is done between said removable security interface (8) and said access control cards (6).

28. Reception equipment that can be matched with a plurality of external security modules (6, 8) to manage access to digital data distributed by an operator, **characterised in that** it includes:
- a non-volatile memory designed to memorise a list of external security modules (6, 8),
- means of verifying if the identifier of an external security module (6, 8) connected to said equipment is present in the list memorised in said non-volatile memory.

29. Equipment set forth in claim 28, **characterised in that** the equipment includes a decoder and **in that** the external security module (6, 8) is an access control card (6) containing information about access rights of a subscriber to said digital data, matching being done between said decoder and said card (6).

30. Equipment set forth in claim 28, **characterised in that** the equipment includes a decoder and **in that** the external security module (6, 8) is a removable security interface (8) provided with a non-volatile memory and designed to cooperate firstly with said decoder, and secondly with a plurality of conditional access control cards (6), to manage access to said digital data, said matching being done between said decoder and said removable security interface (8).

31. Equipment set forth in claim 28, **characterised in that** the equipment includes a decoder provided with a removable security interface (8) with a non-volatile memory and designed to cooperate firstly with said decoder, and secondly with a plurality of conditional access control cards (6) and **in that** matching is done between said removable security interface (8) and said access control cards (6).

32. Decoder that can cooperate with a plurality of external security modules (6, 8) to manage access to audiovisual programs distributed by an operator, each external security module (6, 8) having a single identifier and comprising at least one data professing algorithm, decoder **characterised in that** it includes:
- a non-volatile memory designed to memorise a list of external security modules (6, 8),
- means of verifying if the identifier of an external security module (6, 8) connected to said decoder is present in the list memorised in said non-volatile memory.

33. Decoder set forth in claim 32, **characterised in that** said external security modules (6, 8) are access control cards (6) in which information about access rights of a subscribes to digital data distributed by an operator is memorised.

34. Decoder set forth in claim 32, **characterised in that** said external security modules (6, 8) are removable security interfaces (8) including a non-volatile memory and designed to cooperate firstly with the decoder, and secondly with a plurality of conditional access control cards (6) to manage access to digital data distributed by an operator.

35. Removable security interface designed to cooperate firstly with a reception equipment (2), and secondly with a plurality of conditional access control cards (6), to manage access to digital data distributed by an operator, each card having a unique identifier and containing information about access rights of a subscriber to said digital data, interface **characterised in that** it includes:
- a non-volatile memory designed to memorise a list of subscriber cards,
- means of verifying if the identifier of a card associated with said interface is present in the list memorised in said non-volatile memory.

36. Interface set forth in claim 35 **characterised in that** it consists of a PCMCIA card containing a digital data descrambling software.

37. Interface set forth in claim 35 **characterised in that** it consists of a software.

38. Access control system including a plurality of reception equipment (2) each having a unique identifier and that can cooperate with a plurality of external security modules (6, 8) each having a unique identifier, each external security module (6, 8) containing information about access rights of a subscriber to digital data distributed by an operator, said system also including a commercial management platform (1) communicating with said reception equipment (2) and said external security modules (6, 8), **characterised in that** is also includes:
- a first module arranged in said commercial platform (1) and designed to generate matching queries,
- and a second module arranged in said reception equipment (2) and in said external security modules (6, 8) and designed to process said queries to prepare a matching configuration.

39. Computer program executable on N reception equipment (2) that can cooperate with M security modules (6, 8) each having a unique identifier and in which information about access rights of a subscriber to digital data distributed by an operator are stored, **characterised in that** it comprises instructions for memorising a list of identifiers of part or all of N reception equipment (2) in each external security module (6, 8), and instructions to memorise a list of identifiers of part or all of the M external security modules (6, 8) in each reception equipment (2), instructions to control the identifier of a security module connected to a reception equipment (2) and the identifier of said reception equipment (2), and instructions to prevent access to said data if the identifier of the security module (6, 8) connected to the reception equipment (2) is not present in the list of identifiers previously memorised in this reception equipment (2) or if the identifier of said reception equipment (2) is not present in the list of identifiers previously memorised in said external security module (6, 8).

## Patentansprüche

1. Verfahren zur Paarbildung von einer Anzahl N von Datenempfangseinrichtungen (2) mit einer Anzahl M von externen Sicherheitsmodulen (6, 8), wobei jede Empfangseinrichtung (2) mit einer eindeutigen Kennung versehen ist und jedes externe Sicherheitsmodul (6, 8) eine eindeutige Kennung aufweist, wobei das Verfahren **dadurch gekennzeichnet ist, dass** es eine Konfigurationsphase, die die folgenden Schritte umfasst:
- Speichern einer Liste von Kennungen von Empfangseinrichtungen (2) in jedem externen Sicherheitsmodul (6, 8),
- Speichern einer Liste von Kennungen von externen Sicherheitsmodulen (6, 8) in jeder Empfangseinrichtung (2),
und eine Kontrollphase umfasst, die im Gewähren des Zugriffs auf die Daten besteht, wenn die Kennung eines mit einer Empfangseinrichtung (2) verbundenen externen Sicherheitsmoduls (6, 8) in der in dieser Empfangseinrichtung (2) gespeicherten Liste vorhanden ist und wenn die Kennung der Empfangseinrichtung (2) in der im externen Sicherheitsmodul (6, 8) gespeicherten Liste vorhanden ist, und andernfalls den Zugriff auf die Daten zu stören.

2. Verfahren nach Anspruch 1, **dadurch gekennzeichnet, dass** die Konfiguration nur eingesetzt wird, wenn der Benutzer ein externes Sicherheitsmodul (6, 8) mit einer Empfangseinrichtung (2) verbindet.

3. Verfahren nach Anspruch 1, **dadurch gekennzeichnet, dass** es ferner einen Schritt umfasst, in dem der Betreiber der Empfangseinrichtung (2) eine Zeichengebung zum Verwalten der Kontrollphase sendet, die mindestens eine der folgenden Anweisungen umfasst:
- Aktivieren der Kontrollphase an einem programmierten Zeitpunkt oder nach einer programmierten Zeitbegrenzung,
- Deaktivieren der Kontrollphase an einem programmierten Zeitpunkt oder nach einer programmierten Zeitbegrenzung,
- Angeben eines absoluten Zeitpunkts (beziehungsweise einer Zeitbegrenzung), ab dem (beziehungsweise nach deren Ende) die Aktivierung oder die Deaktivierung der Kontrollphase ausgelöst wird,
- Annullieren des programmierten Zeitpunkts (beziehungsweise der programmierten Zeitbegrenzung).

4. Verfahren nach Anspruch 1, **dadurch gekennzeichnet, dass** der Betreiber der Empfangseinrichtung (2) ferner eine Zeichengebung sendet, die eine Nachricht zur Löschung der Liste der in der Empfangseinrichtung (2) gespeicherten Kennungen umfasst.

5. Verfahren nach Anspruch 1, **dadurch gekennzeichnet, dass** der Betreiber dem externen Sicherheitsmodul (6, 8) ferner eine Zeichengebung sendet, die eine Nachricht zur Löschung der Liste der in diesem externen Sicherheitsmodul (6, 8) gespeicherten Kennungen umfasst.

6. Verfahren nach Anspruch 1, **dadurch gekennzeichnet, dass** der Betreiber einer Empfangseinrichtung (2) die Liste der M Kennungen der externen Sicherheitsmodule (6, 8) über eine EMM-Nachricht sendet, die für die Empfangseinrichtung (2) spezifisch ist.

7. Verfahren nach Anspruch 1, **dadurch gekennzeichnet, dass** der Betreiber einem externen Sicherheitsmodul (6, 8) die Liste der N Kennungen von Empfangseinrichtungen (2) über eine EMM-Nachricht sendet, die für das externe Sicherheitsmodul (6, 8) spezifisch ist.

8. Verfahren nach Anspruch 1, **dadurch gekennzeichnet, dass** der Betreiber die Liste der M Kennungen von externen Sicherheitsmodulen (6, 8) über eine EMM-Nachricht, die für die Gruppe von Empfangseinrichtungen (2) spezifisch ist, an eine Gruppe von Empfangseinrichtungen (2) sendet.

9. Verfahren nach Anspruch 1, **dadurch gekennzeichnet, dass** der Betreiber die Liste der N Kennungen von Empfangseinrichtungen (2) über eine EMM-Nachricht, die für die Gruppe von externen Sicherheitsmodulen (6, 8) spezifisch ist, an eine Gruppe von externen Sicherheitsmodulen (6, 8) sendet.

10. Verfahren nach Anspruch 3 oder 4, **dadurch gekennzeichnet, dass** der Betreiber die Zeichengebungsnachricht einer Empfangseinrichtung (2) über eine EMM-Nachricht liefert, die für die Empfangseinrichtung (2) spezifisch ist.

11. Verfahren nach Anspruch 3 oder 4, **dadurch gekennzeichnet, dass** der Betreiber die Zeichengebungsnachricht einer Gruppe von Empfangseinrichtungen (2) über eine EMM-Nachricht liefert, die für die Gruppe von Empfangseinrichtungen (2) spezifisch ist.

12. Verfahren nach Anspruch 5, **dadurch gekennzeichnet, dass** der Betreiber die Zeichengebungsnachricht einem externen Sicherheitsmodul über eine EMM-Nachricht liefert, die für das externe Sicherheitsmodul (2) spezifisch ist.

13. Verfahren nach Anspruch 5, **dadurch gekennzeichnet, dass** der Betreiber die Zeichengebungsnachricht einer Gruppe von externen Sicherheitsmodulen (6, 8) über eine EMM-Nachricht liefert, die für die Gruppe von externen Sicherheitsmodulen (6, 8) spezifisch ist.

14. Verfahren nach Anspruch 3 oder 4, **dadurch gekennzeichnet, dass** der Betreiber einer Gruppe von Empfangseinrichtungen (2) in einem privaten Strom eine Zeichengebungsnachricht für die Kontrollphase sendet, wobei der private Fluss durch eine dedizierte Software verarbeitet wird, die in jeder Empfangseinrichtung (2) in Abhängigkeit von der Kennung der Empfangseinrichtung (2) ausführbar ist.

15. Verfahren nach Anspruch 1, **dadurch gekennzeichnet, dass** die Liste von Kennungen von externen Sicherheitsmodulen (6, 8) in einem privaten Fluss an eine Gruppe von Empfangseinrichtungen (2) gesendet wird und durch eine dedizierte Software verarbeitet wird, die in jeder Empfangseinrichtung (2) in Abhängigkeit von der Kennung der Empfangseinrichtung (2) ausführbar ist.

16. Verfahren nach Anspruch 1, **dadurch gekennzeichnet, dass** die Liste von Kennungen von Empfangseinrichtungen (2) in einem privaten Fluss an eine Gruppe von externen Sicherheitsmodulen (6, 8) gesendet wird, der durch eine dedizierte Software verarbeitet wird, die in jedem der externen Sicherheitsmodule (6, 8) oder in der Empfangseinrichtung (2), mit der jedes der externen Sicherheitsmodule (6, 8) verbunden ist, in Abhängigkeit von der Kennung des externen Sicherheitsmoduls (6, 8) ausführbar ist.

17. Verfahren nach Anspruch 1, **dadurch gekennzeichnet, dass** die digitalen Daten unverschlüsselt oder in verwürfelter Form verteilt werden.

18. Verfahren nach Anspruch 17, **dadurch gekennzeichnet, dass** die digitalen Daten audiovisuelle Programme darstellen.

19. Verfahren nach Anspruch 1, **dadurch gekennzeichnet, dass** die Liste der Kennungen der M Sicherheitsmodule, die in einer Empfangseinrichtung (2) gespeichert sind, verschlüsselt ist.

20. Verfahren nach Anspruch 1, **dadurch gekennzeichnet, dass** die Liste der Kennungen der N Empfangseinrichtungen (2), die in einem externen Sicherheitsmodul (6, 8) gespeichert sind, verschlüsselt ist.

21. Verfahren nach einem der Ansprüche 6 bis 13, **dadurch gekennzeichnet, dass** es ferner einen Mechanismus umfasst, der dazu bestimmt ist, die Verwendung einer an ein gleiches externes Sicherheitsmodul (6, 8) oder an eine gleiche Empfangseinrichtung (2) gesendeten EMM zu verhindern.

22. Verfahren nach Anspruch 6, 7, 10 oder 12, **dadurch gekennzeichnet, dass** die EMM das folgende Format aufweist:

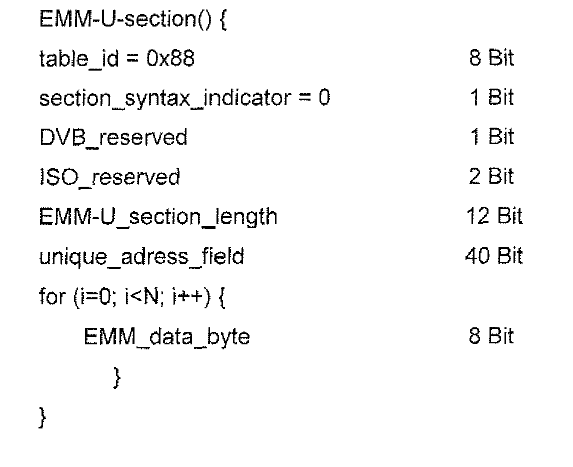

23. Verfahren nach Anspruch 8, 9, 11 oder 13, **dadurch gekennzeichnet, dass** die EMM-Nachricht alle externen Sicherheitsmodule (6, 8) oder alle Empfangseinrichtungen (2) betrifft und das folgende Format aufweist:

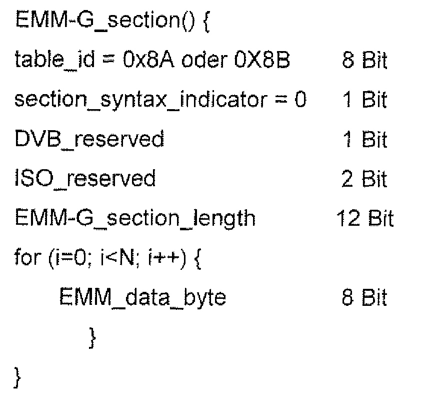

24. Verfahren nach Anspruch 8, 9, 11 oder 13, **dadurch gekennzeichnet, dass** die EMM-Nachricht für eine Untergruppe von externen Sicherheitsmodulen (6, 8) oder eine Untergruppe von Empfangseinrichtungen (2) spezifisch ist und das folgende Format aufweist:

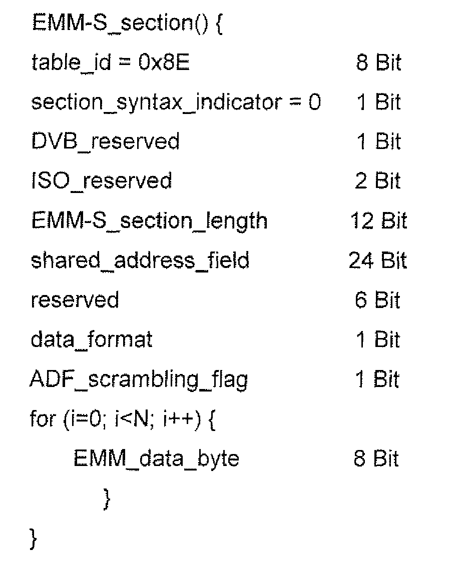

25. Verfahren nach einem der Ansprüche 1 bis 24, **dadurch gekennzeichnet, dass** die Empfangseinrichtung (2) einen Decodierer umfasst und das externe Sicherheitsmodul (6, 8) eine Zugriffskontrollkarte (6) umfasst, in der die die Zugriffsrechte eines Teilnehmers betreffenden Informationen für durch einen Betreiber versteilte digitale Daten gespeichert sind, und **dadurch**, dass die Paarbildung zwischen dem Decodierer und der Karte (6) durchgeführt wird.

26. Verfahren nach einem der Ansprüche 1 bis 24, **dadurch gekennzeichnet, dass** die Empfangseinrichtung (2) einen Decodierer umfasst und das externe Sicherheitsmodul (6, 8) eine auswechselbare Sicherheitsschnittstelle (8) umfasst, die mit einem nichtflüchtigen Speicher versehen ist und dazu bestimmt ist, einerseits mit dem Decodierer und andererseits mit mehreren Karten zur bedingten Zugriffskontrolle (6) zusammenzuwirken, um den Zugriff auf durch einen Betreiber verteilte digitale Daten zu verwalten, und **dadurch**, dass die Paarbildung zwischen dem Decodierer und der auswechselbaren Sicherheitsschnittstelle (8) durchgeführt wird.

27. Verfahren nach einem der Ansprüche 1 bis 24, **dadurch gekennzeichnet, dass** die Empfangseinrichtung (2) einen Decodierer umfasst, der mit einer auswechselbaren Sicherheitsschnittstelle (8) versehen ist, die einen nichtflüchtigen Speicher aufweist und dazu bestimmt ist, einerseits mit dem Decodierer und andererseits mit mehreren Karten zur bedingten Zugriffskontrolle (6) zusammenzuwirken und **dadurch**, dass die Paarbildung zwischen der auswechselbaren Sicherheitsschnittstelle (8) und den Zugriffskontrollkarten (6) durchgeführt wird.

28. Empfangseinrichtung, die mit mehreren externen Sicherheitsmodulen (6, 8) Paare bilden kann, um den Zugriff auf durch einen Betreiber verteilte digitale Daten zu verwalten, **dadurch gekennzeichnet, dass** sie Folgendes umfasst:
- einen nichtflüchtigen Speicher, der dazu bestimmt ist, eine Liste externer Sicherheitsmodule (6, 8) zu speichern,
- Mittel zur Überprüfung, ob die Kennung eines externen Sicherheitsmoduls (6, 8), das mit der Einrichtung verbunden ist, in der im nichtflüchtigen Speicher gespeicherten Liste vorhanden ist.

29. Einrichtung nach Anspruch 28, **dadurch gekennzeichnet, dass** sie einen Decodierer umfasst und dass das externe Sicherheitsmodul (6, 8) eine Zugriffskontrollkarte (6) ist, die Informationen umfasst, die die Zugriffsrechte eines Teilnehmers auf die digitalen Daten betreffen, wobei die Paarbildung zwischen dem Decodierer und der Karte (6) durchgeführt wird.

30. Einrichtung nach Anspruch 28, **dadurch gekennzeichnet, dass** sie einen Decodierer umfasst, und **dadurch**, dass das externe Sicherheitsmodul (6, 8) eine auswechselbare Sicherheitsschnittstelle (8) ist, die mit einem nichtflüchtigen Speicher versehen und dazu bestimmt ist, einerseits mit dem Decodierer und andererseits mit mehreren Karten zur bedingten Zugriffskontrolle (6) zusammenzuwirken, um den Zugriff auf die digitalen Daten zu verwalten, wobei die Paarbildung zwischen dem Decodierer und der auswechselbaren Sicherheitsschnittstelle (8) ausgeführt wird.

31. Einrichtung nach Anspruch 28, **dadurch gekennzeichnet, dass** sie einen Decodierer umfasst, der mit einer auswechselbaren Sicherheitsschnittstelle (8) versehen ist, die einen nichtflüchtigen Speicher aufweist und dazu bestimmt ist, einerseits mit dem Decodierer und andererseits mit mehreren Karten zur bedingten Zugriffskontrolle (6) zusammenzuwirken, und **dadurch**, dass die Paarbildung zwischen der auswechselbaren Sicherheitsschnittstelle (8) und den Zugriffskontrollkarten (6) durchgeführt wird.

32. Decodierer, der mit mehreren externen Sicherheitsmodulen (6, 8) zusammenwirken kann, um den Zugriff auf audiovisuelle Programme zu verwalten, die durch einen Betreiber verteilt werden, wobei jedes externe Sicherheitsmodul (6, 8) eine eindeutige Kennung aufweist und mindestens einen Datenverarbeitungsalgorithmus umfasst, wobei der Decodierer **dadurch gekennzeichnet ist, dass** er Folgendes umfasst:
- einen nichtflüchtigen Speicher, der dazu bestimmt ist, eine Liste externer Sicherheitsmodule (6, 8) zu speichern,
- Mittel zum Überprüfen, ob die Kennung eines mit dem Decodierer verbundenen externen Sicherheitsmoduls (6, 8) in der im nichtflüchtigen Speicher gespeicherten Liste vorhanden ist.

33. Decodierer nach Anspruch 32, **dadurch gekennzeichnet, dass** die externen Sicherheitsmodule (6, 8) Zugriffskontrollkarten (6) sind, in denen Informationen gespeichert sind, die die Zugriffsrechte eines Teilnehmers auf durch einen Betreiber verteilte digitale Daten betreffen.

34. Decodierer nach Anspruch 32, **dadurch gekennzeichnet, dass** die externen Sicherheitsmodule (6,8) auswechselbare Sicherheitsschnittstellen (8) sind, die einen nichtflüchtige Speicher umfassen und dazu bestimmt sind, einerseits mit dem Decodierer und andererseits mit mehreren Karten zur bedingten Zugriffskontrolle (6) zusammenzuwirken, um den Zugriff auf durch einen Betreiber verteilte digitale Daten zu verwalten.

35. Auswechselbare Sicherheitsschnittstelle, die dazu bestimmt ist, einerseits mit einer Empfangseinrichtung (2) und andererseits mit mehreren Karten zur bedingten Zugriffskontrolle (6) zusammenzuwirken, um den Zugriff auf durch einen Betreiber verteilte digitale Daten zu verwalten, wobei jede Karte eine eindeutige Kennung aufweist und Informationen umfasst, die die Zugriffsrechte eines Teilnehmers auf die digitalen Daten betreffen, wobei die Schnittstelle **dadurch gekennzeichnet ist, dass** sie Folgendes umfasst:
- einen nichtflüchtige Speicher, der dazu bestimmt ist, eine Liste von Teilnehmerkarten zu speichern,
- Mittel zum Überprüfen, ob die Kennung einer der Schnittstelle zugehörige Karte in der im nichtflüchtigen Speicher gespeicherten Liste vorhanden ist.

36. Schnittstelle nach Anspruch 35, **dadurch gekennzeichnet, dass** sie aus einer PCMCIA-Karte besteht, die eine Software zur Entwürfelung digitaler Daten umfasst.

37. Schnittstelle nach Anspruch 35, **dadurch gekennzeichnet, dass** sie aus einer Software besteht.

38. Zugriffskontrollsystem, das mehrere Empfangseinrichtungen (2) umfasst, die jede eine eindeutige Kennung aufweisen und mit mehreren externen Sicherheitsmodulen (6, 8) zusammenwirken könnten, die jede eine eindeutigen Kennung aufweisen, wobei jedes externe Sicherheitsmodul (6, 8) Informationen umfasst, die die Zugriffsrechte eines Teilnehmers auf durch einen Betreiber verteilte digitale Daten betreffen, wobei das System auch eine gewerbliche Verwaltungsplattform (1) umfasst, die mit den Empfangseinrichtungen (2) und mit den externen Sicherheitsmodulen (6, 8) in Verbindung steht, **dadurch gekennzeichnet, dass** es Folgendes umfasst:
- ein erstes Modul, das in der gewerblichen Plattform (1) angeordnet ist und dazu bestimmt ist, Paarbildungsaufforderungen zu erzeugen,
- und ein zweites Modul, das in den Empfangseinrichtungen (2) und in den externen Sicherheitsmodulen (6, 8) angeordnet ist und dazu bestimmt ist, die Aufforderungen zum Vorbereiten einer Paarbildungskonfiguration zu verarbeiten.

39. Computerprogramm, das auf N Empfangseinrichtungen (2) ausführbar ist, die mit M Sicherheitsmodulen (6, 8) zusammenwirken können, die jede eine eindeutige Kennung aufweisen und in denen Informationen gespeichert sind, die die Zugriffsrechte eines Teilnehmers auf durch einen Betreiber verteilte digitale Daten betreffen, **dadurch gekennzeichnet, dass** es Befehle zum Speichern einer Liste von Kennungen eines Teils oder sämtlicher der N Empfangseinrichtungen (2) in jedem externen Sicherheitsmodul (6, 8) und Befehle zum Speichern einer Liste von Kennungen eines Teils oder sämtlicher der M Sicherheitsmodule (6, 8) in jeder Empfangseinrichtung (2), Befehle zum Kontrollieren der Kennung eines mit einer Empfangseinrichtung (2) verbundenen Sicherheitsmoduls und der Kennung der Empfangseinrichtung (2) und Befehle zum Sperren des Zugriffs auf die Daten umfasst, wenn die Kennung des mit der Empfangseinrichtung (2) verbundenen Sicherheitsmoduls (6, 8) nicht in der vorhergehend in dieser Empfangseinrichtung (2) gespeicherten Liste von Kennungen vorhanden ist oder wenn die Kennung der Empfangseinrichtung (2) nicht in der vorhergehend in dem externen Sicherheitsmodul (6, 8) gespeicherten Liste von Kennungen vorhanden ist.
